# EUROPEAN PATENT APPLICATION

(11) **EP 4 546 036 A1**
(43) Date of publication of application: **30.04.2025**
(21) Application number: 22947204.8
(22) Date of filing: 21.06.2022
(51) Int. Cl.: G02F 1/133, G02F 1/137, E06B 9/24

(54) **DIMMING GLASS SWITCHING METHOD**

(71) Applicant: Brilliant Optronics Co., Ltd, Kaohsiung City 81349 (TW); SAINT-GOBAIN GLASS FRANCE, 92400 Courbevoie (FR)
(72) Inventor: LIN, Tsung-Hsien, Kaohsiung City, Taiwan (CN); LI, Cheng-Chang, Kaohsiung City, Taiwan (CN); TSENG, Heng-Yi, Kaohsiung City, Taiwan (CN); CHANG, Li-Min, Kaohsiung City, Taiwan (CN); LIN, Kuan-Wu, Kaohsiung City, Taiwan (CN)
(74) Representative: Saint-Gobain Recherche
(86) International application number: PCT/CN2022/100151
(87) International publication number: WO 2023/245424

(57) **Abstract**

The present invention provides a method for state switching of a switchable glass to resolve the time delay in switching conventional switchable glass from a hazy state to a transparent state. The method includes a transparency stage, an operation stage and a state switching stage. In the transparency stage, no voltage is applied to the switchable glass and the switchable glass is in a transparent state. In the operation stage, an alternating current is applied to the switchable glass, with an amplitude of the alternating current maintained at a first voltage, and the switchable glass is in a scattering state. In the state switching stage, the amplitude of the alternating current is raised to a second voltage after the operation stage, with the second voltage greater than the first voltage, and the switchable glass maintains in the scattering state. An application of the alternating current is stopped after the state switching stage is maintained for a duration to return to the transparency stage, and the switchable glass is restored to the transparent state.

## Description

### FIELD OF THE INVENTION

The present invention relates to technologies for optoelectronic components and, more particularly, to a method for switching a switchable glass to a privacy protection state and quickly restoring to a transparent state.

### DESCRIPTION OF THE RELATED ART

Conventional glass provides isolation or protects the space inside the glass while allowing lighting as well as visibility of an object on a different side of the glass. A surface of the glass may be frosted, or a matte film may be attached to the surface of the glass, so that light can penetrate through the glass and scatter to form a blurred image on the other side of glass. Thus, the glass realizes privacy protection while retaining the lighting function. In addition, a conventional switchable glass can be switched between a transparent state and a hazy state through an active control method such as electrification.

In the conventional switchable glass, an electric field is changed to disturb liquid crystal molecules, which causes multiple scattering of light incident on the glass. However, after a voltage source stops to supply power, residual charged ions may form a temporary built-in electric field. As a result, the liquid crystal molecules cannot immediately return to the transparent state before electrification. Therefore, the conventional switchable glass has problems such as the delay in mode switching, the poor controllability, and the degraded visual effect.

In view of the foregoing, it is necessary to improve the conventional switchable glass.

### SUMMARY OF THE INVENTION

In order to solve the above problems, it is an objective of the present invention to provide a method for state switching of a switchable glass to allow quick switching between a privacy protection state and a transparent state.

It is another objective of the present invention to provide a method for state switching of a switchable glass, which can improve a hazy visual effect of the switchable glass.

It is still another objective of the present invention to provide a method for state switching of a switchable glass, which can reduce the power consumption of state switching.

As used herein, the term "a", "an" or "one" for describing the number of the elements and members of the present invention is used for convenience, provides the general meaning of the scope of the present invention, and should be interpreted to include one or at least one. Furthermore, unless explicitly indicated otherwise, the concept of a single component also includes the case of plural components.

A method for state switching of a switchable glass of the present invention includes a transparency stage, an operation stage and a state switching stage. In the transparency stage, no voltage is applied to the switchable glass and the switchable glass is in a transparent state. In the operation stage, an alternating current is applied to the switchable glass, with an amplitude of the alternating current maintained at a first voltage, and the switchable glass is in a scattering state. In the state switching stage, the amplitude of the alternating current is raised to a second voltage after the operation stage, with the second voltage greater than the first voltage, and the switchable glass maintains in the scattering state. An application of the alternating current is stopped after the state switching stage is maintained for a duration to return to the transparency stage, and the switchable glass is restored to the transparent state.

Thus, in the method for state switching of the switchable glass of the present invention, by applying the alternating current of the first voltage to the switchable glass, the power consumption for maintaining the scattering state can be reduced. In addition, by applying the alternating current of the second voltage to the switchable glass and stopping the power supply after the duration, a response time required for the switchable glass to be restored from the scattering state to the transparent state can be reduced. Therefore, the method can reduce the delay in mode switching, improve the visual effect of the switchable glass, and reduce the power consumption.

In an example, the first voltage is a lowest voltage value at which the alternating current causes a haze value of the switchable glass to reach 80% or more. Thus, the switchable glass can maintain the privacy protection with lowest energy consumption, thereby saving electricity.

In an example, the second voltage is a voltage value at which a shortest response time is required for the switchable glass to be restored to the transparent state when the application of the alternating current to the switchable glass is stopped. Thus, the delay in switching from the scattering state to the transparent state can be greatly reduced for the switchable glass, thereby improving the state switching controllability.

In an example, the duration is a shortest time during which the alternating current of the second voltage is required to be applied when a response time required for the switchable glass to be restored to the transparent state is less than 0.5 seconds. Thus, the application time of the high-voltage alternating current can be reduced, thereby reducing the power consumption and realizing rapid state switching of the switchable glass.

In an example, the switchable glass includes two substrates and a liquid crystal material located between the two substrates. The two substrates are transparent and conductive. The liquid crystal material includes negative liquid crystals and salt ions. Thus, an electric field may be switched to act on the liquid crystal material, so that the liquid crystal material is disturbed with the change of the electric field and presents multiple scattering states, thereby realizing switching of the switchable mode through electric control.

### BRIEF DESCRIPTION OF THE DRAWINGS

FIG. 1 is a timing diagram of voltage switching according to an exemplary embodiment of the present invention.
FIG. 2 is a schematic diagram showing the switching of a switchable state according to an exemplary embodiment of the present invention.
FIG. 3 is a schematic diagram showing a relationship of a haze value of switchable glass and an applied-voltage value according to an exemplary embodiment of the present invention.
FIG. 4 is a schematic diagram showing a relationship of a response time required for switchable glass to restore transparency and an applied-voltage value according to an exemplary embodiment of the present invention.
FIG. 5 is a schematic diagram showing a relationship of a power supply duration for switchable glass and a response time required for restore transparency according to an exemplary embodiment of the present invention.

### Reference numerals:

S1: Transparency stage; S2: Operation stage; S3: State switching stage;
1: Liquid crystal material; 2: Substrate; V1: First voltage; V2: Second voltage;
T: Duration.

### DETAILED DESCRIPTION OF THE INVENTION

The present invention will become more fully understood from the detailed description given hereinafter and the accompanying drawings which are given by way of illustration only, and thus are not limitative of the present invention. In addition, same reference numerals in different accompanying drawings represent same components, and the description is omitted herein.

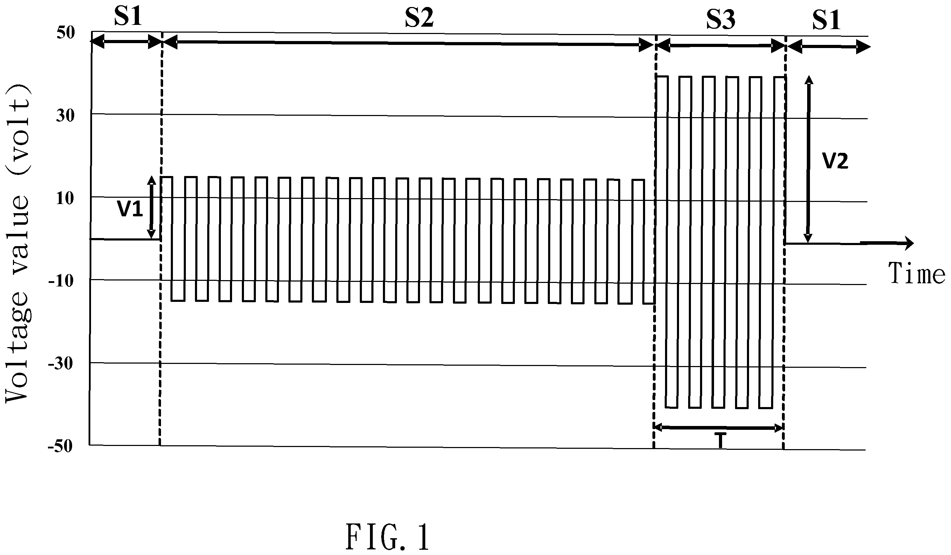

FIG. 1 is an exemplary embodiment of a method for state switching of a switchable glass according to the present invention. The method includes a transparency stage S1, an operation stage S2, and a state switching stage S3. The state switching stage S3 includes entering from the operation stage S2 to the transparency stage S1, to switch the switchable glass from a privacy protection state to a bidirectionally transparent state.

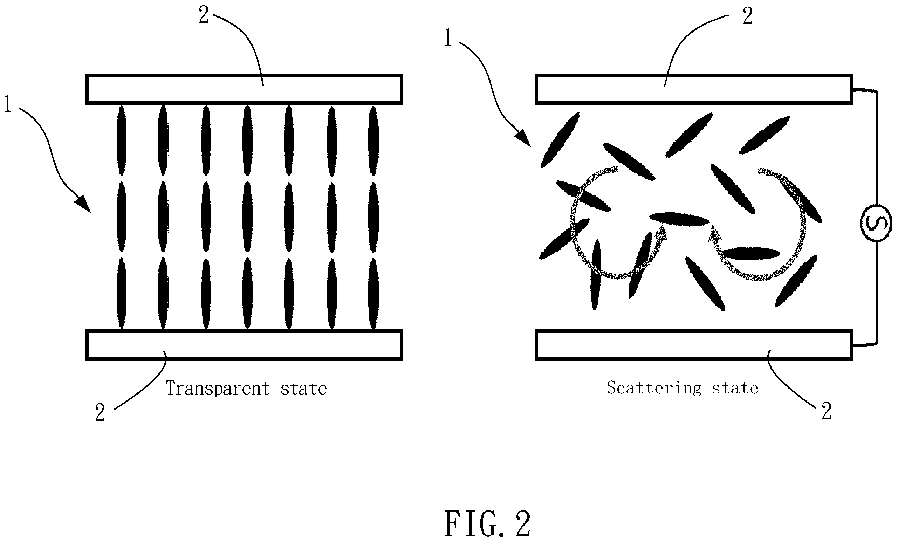

Referring to FIG. 2, the switchable glass may be formed by injecting a liquid crystal material 1 between two transparent and conductive substrates 2. The two substrates 2 are electrically connected to a voltage source to form an electric field to act on the liquid crystal material 1, so that an arrangement direction of liquid crystals can be controlled. In this way, incident light can directly penetrate through the liquid crystal material 1 or be scattered, thereby realizing switching of the switchable glass to be transparent or hazy. In this embodiment, the liquid crystal material 1 includes negative liquid crystals and salt ions, and the two substrates 2 act on the liquid crystal material 1 in a vertical alignment. As shown in FIG. 2, when the two substrates 2 are not electrified, liquid crystal molecules in the liquid crystal material 1 are regularly arranged perpendicularly to the two substrates 2, so that light can directly penetrate the switchable glass, which presents a transparent state. When an alternating voltage is applied between the two substrates 2, the liquid crystal molecules are disturbed with a change of the electric field, and therefore are arranged randomly, so that the light is diffused after a path of the light is changed for several times in the liquid crystal material 1, which presents a scattering state.

Referring to FIG. 1, during the transparency stage S1, no voltage is applied to the switchable glass, so that the switchable glass is in the transparent state. In this case, a clear image penetrating through the switchable glass can be seen on either an inner side or an outer side thereof.

Entering from the transparency stage S1 to the operation stage S2, an alternating current is applied to the switchable glass. An amplitude of the alternating current is a first voltage V1, and a frequency of the alternating current may be a common operating frequency of a general power transmission network, such as 50 Hz or 60 Hz. The present invention is not limited in this regard. When the alternating current is maintained at the first voltage, the switchable glass is in the scattering state. In this case, a hazy image can be seen through the switchable glass.

Entering from the operation stage S2 to the state switching stage S3, the amplitude of the alternating current is raised to a second voltage V2. The second voltage V2 is greater than the first voltage V1. The frequency of the alternating current may remain unchanged. The state switching stage S3 includes maintaining the alternating current at the second voltage V2 for a duration T, so that the switchable glass remains in the scattering state. After the duration T, the supply of the alternating current is stopped to return to the transparency stage S1, so that the switchable glass is immediately restored to the transparent state.

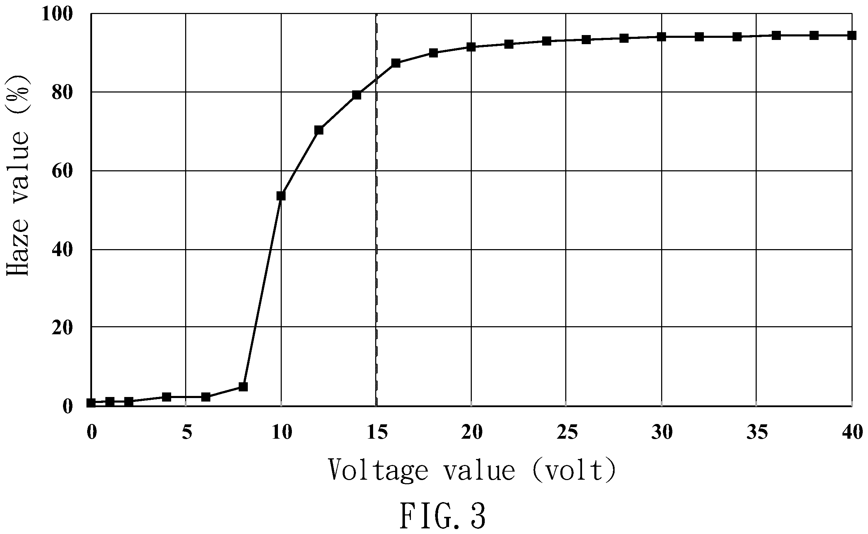

FIG. 3 shows a relationship of a haze value of the switchable glass and a voltage value applied to the switchable glass in this embodiment. When the alternating current applied to the switchable glass is raised to 15 volts or more, the haze value can reach 80% to 94%. Since it is difficult for human eyes to distinguish between shielding effects brought by the haze values of 80% and more, a lowest voltage value that can realize the haze value of 80% or more is used in a case that the switchable glass is to be used for a long time for privacy protection in the operation stage S2, which can save power. Referring to FIG. 1 and FIG. 3, in this embodiment, the voltage value that can realize the haze value of 80% ranges from 10 V to 15 V. Therefore, the first voltage V1 used in the operation stage S2 may be 15 volts.

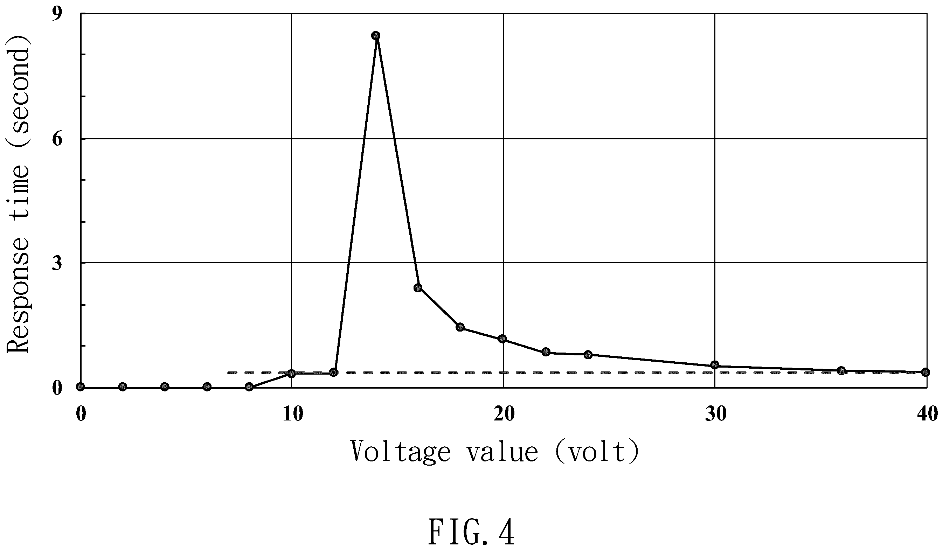

FIG. 4 shows a relationship of a response time required for the switchable glass in this embodiment to restore transparency after the application of the alternating current is stopped and an applied voltage value. In a case that the amplitude of the alternating current is 14 volts, if the power supply to the switchable glass is stopped, the switchable glass requires a response time of 8.5 seconds to be restored from the scattering state to the transparent state. In contrast, using an alternating current greater than 22 volts can reduce the response time to be less than 1 second. Referring to FIG. 1 and FIG. 4 again, in this embodiment, the second voltage V2 used in the state switching stage S3 is preferably 40 volts, and the required response time is 0.36 seconds.

Please refer to FIG. 1, FIG. 3, and FIG. 4. It can be learned from FIG. 4 that, in a case that the alternating current is less than 12 volts, the response time by the switchable glass to restore transparency can be less than 0.35 seconds. However, it can be seen from FIG. 3 that, when the alternating current is less than 12 volts, the haze value of the switchable glass is less than 80%, which cannot realize complete privacy protection. Therefore, neither the first voltage V1 used in the operation stage S2 nor the second voltage V2 used in the state switching stage S3 can be lower than 12 volts.

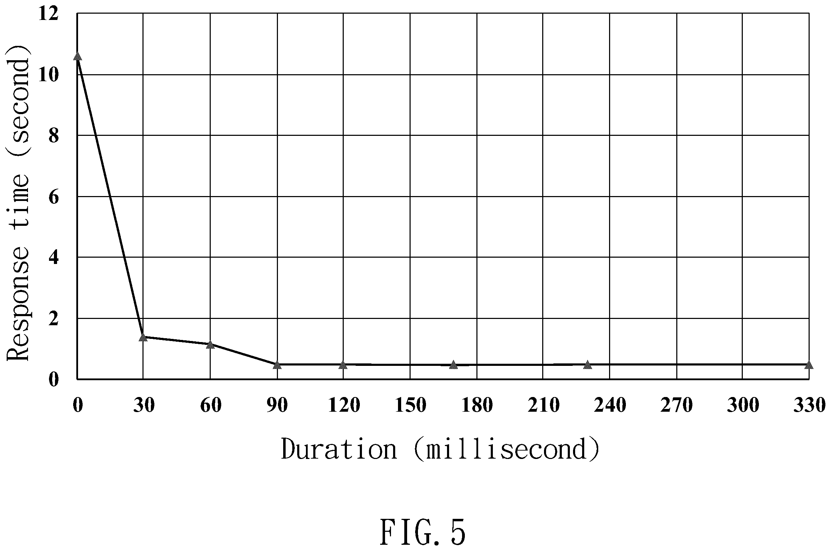

FIG. 5 shows a relationship of a duration during which the alternating current applied to the switchable glass of this embodiment is maintained at 40 V and a response time required to restore transparency. Referring to FIG. 1 again, in this embodiment, the alternating current of 15 volts is first applied to the switchable glass for 10 seconds, then the alternating current is raised to 40 volts, and the supply of the alternating current is stopped after the duration T. As shown in FIG. 5, when the duration T is 90 milliseconds, the response time required for the switchable glass to restore transparency can be reduced to 0.5 seconds. In contrast, if the power supply is stopped directly at 15 volts without raising the alternating current to 40 volts (namely, the duration T is 0 seconds), a response time of nearly 11 seconds is required to restore the transparency of the switchable glass. Thus, when the duration T is more than 90 milliseconds, the delay in switching of the switchable glass from the scattering state to the transparent state can be greatly reduced. In addition, it can be learned from FIG. 5 that, the response time does not decrease significantly after the duration T is increased to be more than 90 milliseconds. Therefore, the duration T is preferably 90 milliseconds.

According to the above, in the method for state switching of the switchable glass of the present invention, by applying the alternating current of the first voltage to the switchable glass, the power consumption for maintaining the scattering state can be reduced. In addition, by applying the alternating current of the second voltage to the switchable glass and stopping the power supply after the duration, a response time required for the switchable glass to be restored from the scattering state to the transparent state can be reduced. Therefore, the method can reduce the delay in mode switching, improve the visual effect of the switchable glass, and reduce the power consumption.

Although the invention has been described in detail with reference to its presently preferable embodiments, it will be understood by one of ordinary skill in the art that various modifications can be made without departing from the spirit and the scope of the invention, as set forth in the appended claims.

## Claims

1. A method for state switching of a switchable glass, comprising:
a transparency stage, in which no voltage is applied to the switchable glass and the switchable glass is in a transparent state;
an operation stage, in which an alternating current is applied to the switchable glass, with an amplitude of the alternating current maintained at a first voltage, and the switchable glass is in a scattering state; and
a state switching stage, in which the amplitude of the alternating current is raised to a second voltage after the operation stage, with the second voltage greater than the first voltage, and the switchable glass maintains in the scattering state, and wherein an application of the alternating current is stopped after the state switching stage is maintained for a duration to return to the transparency stage, and the switchable glass is restored to the transparent state.

2. The method for state switching of the switchable glass as claimed in claim 1, wherein the first voltage is a lowest voltage value at which the alternating current causes a haze value of the switchable glass to reach 80% or more.

3. The method for state switching of the switchable glass as claimed in claim 1, wherein the second voltage is a voltage value at which a shortest response time is required for the switchable glass to be restored to the transparent state when the application of the alternating current to the switchable glass is stopped.

4. The method for state switching of the switchable glass as claimed in claim 1, wherein the duration is a shortest time during which the alternating current of the second voltage is required to be applied when a response time required for the switchable glass to be restored to the transparent state is less than 0.5 seconds.

5. The method for state switching of the switchable glass as claimed in any of claims 1 to 4, wherein the switchable glass comprises two substrates and a liquid crystal material located between the two substrates, wherein the two substrates are transparent and conductive, and wherein the liquid crystal material includes negative liquid crystals and salt ions.
